# FASCICULE DE BREVET EUROPEEN

(11) **EP 2 828 706 B1**
(45) Date de publication et mention de la délivrance du brevet: **24.07.2019**
(21) Numéro de dépôt: 13719900.6
(22) Date de dépôt: 19.03.2013
(51) Int. Cl.: G02C 7/02

(54) **METHODE DE FABRICATION D'UNE LENTILLE OPHTALMIQUE CORRECTRICE DE LUNETTES PERSONNALISEE POUR UN PORTEUR**
VERFAHREN ZUR HERSTELLUNG EINER FÜR EINEN TRÄGER PERSONALISIERTEN KORRIGIERENDEN BRILLENGLASLINSE
METHOD FOR MANUFACTURING A CORRECTIVE OPHTHALMIC GLASSES LENS PERSONALISED FOR A WEARER

(30) Priorité: 20.03.2012 FR 1200841
(43) Date de publication de la demande: 28.01.2015
(73) Titulaire: Essilor International, 94220 Charenton-le-Pont (FR)
(72) Inventeur: CUSSAC, Laurent, F-94220 Charenton-le-Pont (FR)
(74) Mandataire: Jacobacci Coralis Harle
(86) Numéro de dépôt international: PCT/FR2013/050582
(87) Numéro de publication internationale: WO 2013/140086

(56) Documents cités:
- EP-A1- 1 515 179
- WO-A1-00/16683
- WO-A2-01/88654
- US-A1- 2008 052 194
- US-A1- 2010 157 242
- US-A1- 2010 179 799
- ESSER G ET AL: "DIE PERFORMANCE INDIVIDUELLER GLEITSICHTGLAESER", DEUTSCHE OPTIKER ZEITUNG, XX, DE, 1 décembre 2005 (2005-12-01), pages 38-44, XP000962762,

## Description

### DOMAINE TECHNIQUE AUQUEL SE RAPPORTE L'INVENTION

La présente invention concerne de manière générale le domaine de la fabrication des lentilles ophtalmiques correctrices de lunettes. Plus précisément, l'invention concerne un procédé permettant de personnaliser une lentille correctrice par la sélection d'un ensemble de paramètres de configuration tels que le matériau, la fonction de puissance optique, la couleur, le(s) traitement(s) de surface, la chromaticité, tout en prenant en compte notamment le comportement de vision du porteur de lunettes, c'est-à-dire de l'utilisation envisagée des lunettes pour la conduite en voiture et/ou au bureau.

Elle concerne plus particulièrement un procédé permettant d'afficher graphiquement une pluralité de paramètres de configuration d'une lentille de correction ophtalmique et de sélectionner progressivement les différents paramètres de configuration, en tenant compte notamment des paramètres de conception optique et des paramètres morphologiques du porteur, pour déterminer rapidement une lentille de correction personnalisée optimale.

Elle concerne en particulier un procédé de configuration pour la fabrication de lentilles de correction de type uni-, bi- ou tri-focale, de lentilles à focale variable ou de verres progressifs.

### ARRIERE-PLAN TECHNOLOGIQUE

La personnalisation de lentilles ophtalmiques correctrices repose sur la sélection par le futur porteur de lunettes d'un certain nombre d'options parmi un ensemble de paramètres de configuration proposés par exemple par un opticien-conseil. Les demandes de brevet suivantes sont des documents pertinents dans ce domaine technique: US2010/0157242 A1, WO00/16683 A1, US2010/0179799 A1 et WO2007/056797 A1.

Toutefois, le choix de certains paramètres de configuration, par exemple le matériau de la lentille combiné aux paramètres de conception de la lentille, peut être incompatible avec d'autres paramètres tels que la monture sélectionnée. Il est essentiel de pouvoir proposer à un porteur une lentille personnalisée réalisable en fonction de la prescription et de l'ensemble des paramètres de configuration sélectionnés. D'autre part, il est souhaitable que la sélection de l'ensemble des paramètres de configuration soit effectuée dans un laps de temps le plus court possible.

### OBJET DE L'INVENTION

Afin de remédier à l'inconvénient précité de l'état de la technique, on propose, selon la présente invention, une méthode de fabrication d'une lentille ophtalmique correctrice de lunettes personnalisée pour un porteur, telle que définie dans la revendication 1.

Typiquement, les paramètres de configuration de la lentille comprennent des paramètres de fabrication de la lentille, dont la répartition de la fonction de puissance optique, le matériau de la lentille, la couleur de la lentille, la polarisation de la lentille, le(s) traitement(s) de surface incluant le traitement anti-reflet, le traitement de résistance aux chocs, le traitement anti-rayure, le traitement antistatique, le traitement hydrophobe, le traitement oléophobe, le traitement polarisant, la propriété de photochromie de la lentille, et/ou des paramètres géométriques et morphologiques relatifs au porteur et à une monture de lunettes.

Dans un premier mode de réalisation, la méthode de fabrication d'une lentille ophtalmique correctrice comprend en outre les étapes suivantes :
- sélection d'une deuxième image représentative d'un environnement visuel et affichage de ladite deuxième image en couche d'arrière-plan d'une deuxième zone de l'interface graphique du module concerné ;
- simulation d'un deuxième filtre correctif associé à une autre valeur du paramètre de configuration de la lentille ;
- affichage du deuxième filtre correctif en superposition par transparence sur ladite deuxième image en couche d'arrière plan de la deuxième zone graphique de manière à simuler la vision du porteur à travers une deuxième lentille virtuelle personnalisée conformément à l'autre valeur du paramètre de configuration, de manière à permettre la comparaison d'au moins deux lentilles virtuelles personnalisées.

Dans un deuxième mode de réalisation particulier de la méthode de fabrication d'une lentille ophtalmique correctrice, l'exécution d'au moins un des modules comporte les étapes suivantes :
- sélection d'au moins une vue du porteur et affichage de ladite vue du porteur en couche d'arrière-plan d'une zone de l'interface graphique du module concerné ;
- simulation d'un filtre de forme et d'aspect de la lentille en fonction de la valeur sélectionnée du paramètre de configuration associé au module ;
- affichage du filtre de forme et d'aspect de la lentille en superposition par transparence sur la couche d'arrière plan de manière à simuler une image de la lentille portée par le porteur et personnalisée conformément à la valeur sélectionnée du paramètre de configuration associé au module.

Dans une première variante du premier ou du second mode de réalisation, l'étape de sélection d'au moins une image et/ou d'au moins une vue du porteur comprend la sélection d'une séquence d'images ou d'une image en trois dimensions.

Dans une autre variante du premier ou du second mode de réalisation, l'étape de simulation d'un filtre comprend la simulation dynamique d'un filtre par une séquence d'images ou par une image en trois dimensions.

Avantageusement, la méthode comporte en outre l'affichage d'un contenu textuel en fonction de la valeur sélectionnée du paramètre de configuration associé au module.

De façon préférée, la méthode de fabrication d'une lentille ophtalmique correctrice comporte en outre une étape de sélection d'une monture de lunettes.

Avantageusement, la méthode de fabrication comporte un module de choix de contour de lentille en tant que paramètre de configuration, ce module comprenant, dans son interface graphique, des moyens de sélection d'au moins un contour de lentille parmi une présélection de contours de lentille associés à différentes montures de lunettes, des moyens de simulation graphique d'une lentille virtuelle présentant le contour sélectionné et des moyens de validation de la sélection d'un contour de lentille.

Préférentiellement, la méthode de fabrication d'une lentille ophtalmique correctrice comporte en outre une étape de présentation des valeurs des différents paramètres de configuration sélectionnés et validés à l'issue de l'exécution de ladite au moins une séquence ordonnée.

De façon avantageuse, la méthode de fabrication d'une lentille ophtalmique correctrice comporte en outre une étape de vérification de la faisabilité d'une lentille ophtalmique correctrice conformément aux valeurs des différents paramètres de configuration sélectionnés et validés à l'issue de l'exécution de ladite au moins une séquence ordonnée.

Préférentiellement, la méthode de fabrication d'une lentille ophtalmique correctrice comporte en outre une étape de constitution d'au moins une présélection de valeurs associée à un paramètre de configuration.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est un schéma-bloc représentant les différentes étapes du procédé de l'invention ;
- la figure 2 est une vue d'une interface graphique d'un module général de présentation et de sélection d'un ensemble de paramètres de configuration selon un mode de réalisation particulier ;
- la figure 3 est une vue d'une interface graphique d'un module général de présentation et de sélection d'un ensemble de paramètres de configuration selon un autre mode de réalisation particulier ;
- la figure 4 est une vue d'une interface graphique d'un module de configuration selon un mode de réalisation particulier ;
- la figure 5 est un schéma-bloc représentant les différentes zones d'une interface graphique d'un module de configuration ;
- la figure 6 est un premier exemple d'interface graphique d'un module de configuration pour la sélection d'un type de lentille en mode vision ;
- la figure 7 est un exemple d'interface graphique d'un autre module de configuration pour la sélection de la teinte et/ou photochromie d'une lentille;
- la figure 8 est un exemple d'interface graphique d'un module de configuration permettant de visualiser graphiquement différents paramètres de la lentille (épaisseur et/ou poids) en fonction du type de lentille sélectionnée.

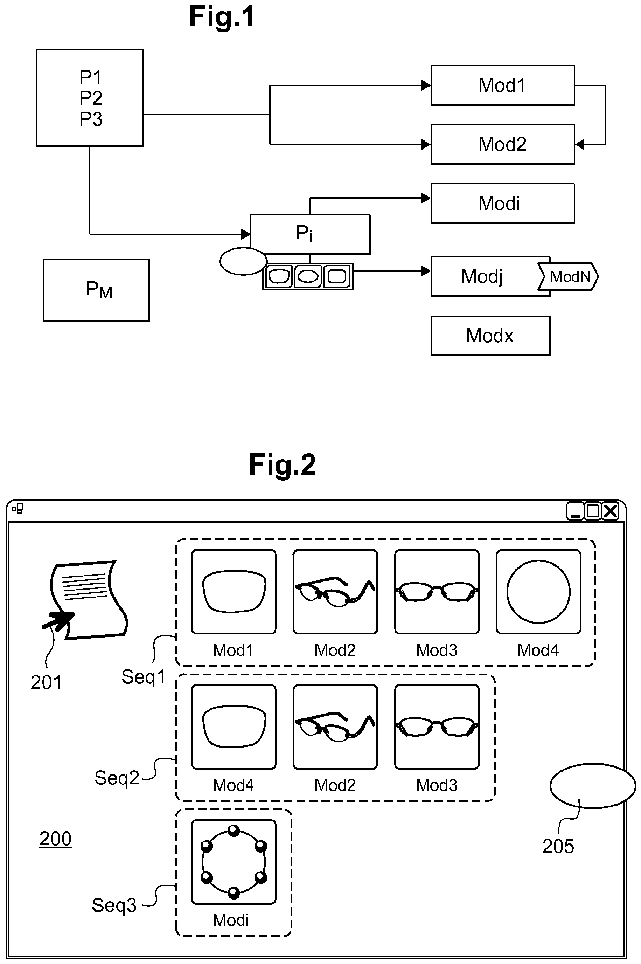

La figure 1 est un schéma-bloc représentant différentes étapes d'un procédé pour déterminer les paramètres de configuration d'une lentille correctrice ou d'une paire de lentilles correctrices. Dans le cadre du présent document, les termes « lentille » et « verre » sont utilisés indifféremment et doivent être considérés comme synonymes.

Les paramètres de configuration sont très nombreux. Dans le présent document on désigne par P1, P2, P3... Pi ou ...PM un paramètre de configuration particulier, tel que : le matériau de la lentille, le design de la fonction optique de puissance, la couleur de la lentille, un traitement anti-reflet. Chacun de ces paramètres de configuration peut prendre une valeur parmi un ensemble de valeurs prédéfinies. Les valeurs de certains de ces paramètres peuvent être connues d'avance (la prescription définit généralement les valeurs de correction de puissance en vision de loin et en vision de près) et peuvent être enregistrées informatiquement par exemple. Un certain nombre d'autres valeurs de paramètres de configuration doivent être sélectionnées par l'opticien et/ou le futur porteur.

Une fois que l'opticien et/ou le futur porteur ont sélectionné un ensemble de valeurs de paramètres de configuration de la lentille et qu'on vérifie que la lentille correspondante est bien réalisable, sa fabrication peut démarrer.

Cette fabrication est alors réalisée selon les étapes de fabrication habituelles, connues de l'homme du métier. En particulier, la prescription de correction visuelle, le matériau choisi pour la lentille, les paramètres de conception optique de la lentille et des paramètres géométriques de la monture choisie (notamment son contour) sont utilisés pour calculer des données de modélisation des faces de réfraction de la lentille et de son contour, données qui sont transmises aux dispositifs de fabrication pour obtenir la lentille voulue.

La figure 1 représente l'architecture générale du logiciel mettant en oeuvre le procédé de l'invention. Des paramètres de configurations P1, P2, P3... Pi... PN sont enregistrés informatiquement. On désigne par Mod1, Mod2, Mod3... Modi... ModN différents modules logiciels interactifs de configuration. Chaque module Modi est généralement associé à un des paramètres de configuration Pi. Néanmoins, un module Modi peut être associé à plusieurs paramètres de configuration Pi. Par exemple, le module Mod1 peut être associé à plusieurs paramètres de configuration P1, P2, P3.

Ces modules sont intégrés à une application logicielle comprenant des données stockées dans une base de données et des fichiers, une interface graphique et des scripts. Cette application est exécutée sur un ordinateur, une tablette numérique tactile, un téléphone intelligent, etc.

L'exécution d'un module de configuration Modi a pour but d'aboutir à la sélection d'une valeur pour le paramètre de configuration Pi associé à ce module. L'exécution d'un module de configuration Modi comporte une présentation graphique d'une simulation en fonction du ou des paramètres sélectionnés. A l'issue de l'exécution d'un module logiciel Modi, une valeur du paramètre Pi est validée et enregistrée informatiquement. Les différents modules peuvent être exécutés de manière indépendante les uns des autres (exemple module Modx sur la Fig. 1) ou encore en série (par ex Mod1 et Mod2 sur la fig. 1). On passe séquentiellement du module Mod1, au module Mod2... Modi... Modj. Lorsque les paramètres associés aux différents modules utiles ont été validés et enregistrés, un module ModN permet de vérifier la faisabilité de la configuration d'ensemble de la lentille. Si la faisabilité de la lentille est confirmée, on peut passer à l'étape de vente de la lentille et lancer sa fabrication.

Avantageusement, l'application logicielle possède des moyens pour définir une séquence d'exécution des différents modules de manière à aboutir rapidement vers une configuration de lentille à la fois réalisable techniquement et adaptée aux besoins du porteur.

La figure 2 est une vue d'une interface graphique 200 d'un module général de présentation et de sélection d'un ensemble de paramètres de configuration selon un mode de réalisation particulier. L'interface graphique 200 est affichée par exemple sur un écran tactile de téléphone mobile ou sur une tablette numérique. Un fichier, représenté sur l'interface graphique par une icône 201, enregistre les valeurs des paramètres de configuration relatifs à une lentille correctrice pour un porteur. De façon avantageuse, le fichier correspondant à l'icône 201 contient aussi des paramètres géométriques et morphologiques relatifs au porteur et à une montre de lunettes. Différents modules logiciels interactifs de configuration Mod1, Mod2, Mod3... Modj sont représentés par des raccourcis sur l'interface graphique 200. L'interface 200 permet de sélectionner une séquence ordonnée de modules par une action de glisser-déplacer. Sur l'interface 200, plusieurs séquences Seq1, Seq2, Seq3 sont prédéfinies. La séquence Seq1 commence par l'exécution du module Mod1, puis du module Mod2, du module Mod3 et se termine par le module Mod4. La séquence Seq2 commence par l'exécution du module Mod4, puis du module Mod2 et se termine par le module Mod3. La séquence Seq3 comporte un seul module Modi.

A titre d'exemple illustratif et non limitatif, le module Mod1 peut correspondre à un module de configuration du design optique, c'est à dire de la répartition de la puissance optique, d'une lentille à focale progressive. Le module Mod2 peut correspondre à un module de configuration d'un traitement anti-reflet. Le module Mod3 peut correspondre à un module de configuration d'une teinte et/ou de la photochromie de la lentille. Le module Mod4 peut correspondre à un module de configuration de la polarisation de la lentille. Enfin, le module Modi peut correspondre à un module de configuration de l'épaisseur et du poids de la lentille.

Le choix de la séquence permet de sélectionner les paramètres qui vont être configurés. Le choix d'une séquence impose aussi l'ordre dans lequel les modules vont être exécutés. A l'issue de chaque module, un paramètre de configuration est déterminé par l'enregistrement d'une valeur validée du paramètre concerné. Le bouton graphique 205 permet de démarrer l'application, c'est à dire l'exécution d'une séquence sélectionnée.

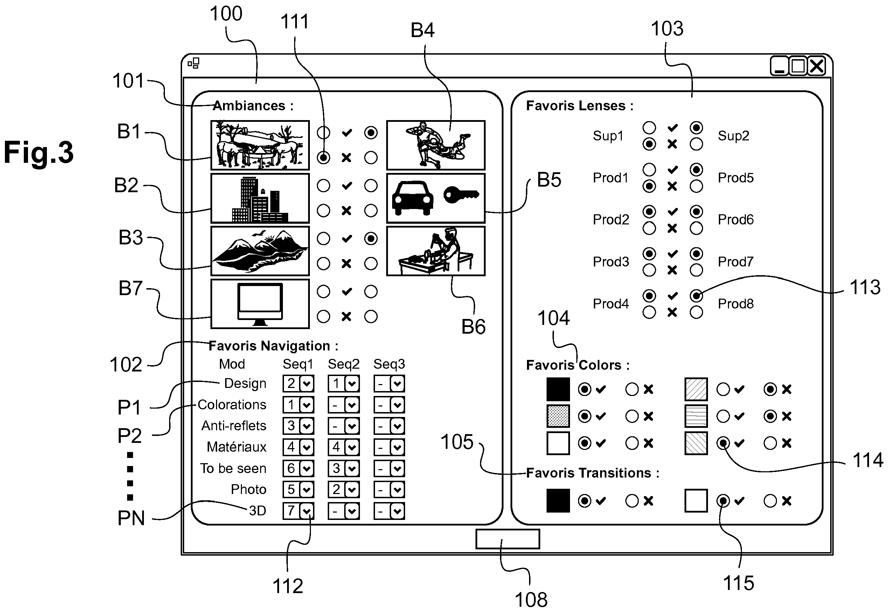

La figure 3 est une vue d'un autre type d'interface graphique 100 d'une application de présentation et de pré-sélection d'un ensemble de paramètres de configuration. L'interface graphique 100 est affichée par exemple sur un écran d'ordinateur. L'interface graphique 100 est par exemple l'interface de configuration de l'opticien, cette interface 100 n'étant pas nécessairement présentée ni accessible à un client porteur de lunettes. L'interface graphique 100 comporte plusieurs zones de présélection. Une première zone de pré-sélection 101 comporte des icônes B1, B2, ...B7 correspondant chacune à une image d'ambiance statique B1, ...B6 ou dynamique B7 et des moyens 111 de sélectionner ou de désélectionner chaque image. Les moyens de sélection 111 peuvent se présenter sous différentes formes connues par exemple de menu déroulant ou de zone sélectionnable en appuyant sur le bouton de la souris de l'ordinateur. L'image dynamique B7 peut par exemple correspondre à un film ou à une vue en trois dimensions. Les images B1, B2...B7 peuvent provenir d'images photo ou vidéos ou encore d'images de simulation. Chaque image d'ambiance B1, B2, ...B7 correspond à un environnement visuel d'utilisation et est destinée à simuler l'environnement d'utilisation comme cela est détaillé plus loin. L'opticien peut ainsi limiter la sélection des images d'ambiance qui seront proposées par exemple aux images B4 et B6 parmi les images d'ambiance prédéfinies B1, B2, ...B7.

Une deuxième zone de pré-sélection 102 de l'interface graphique 100 de la figure 3 comporte un tableau de correspondance entre une liste de séquences Seq1, Seq2, Seq3 d'exécution des modules logiciels et une liste de paramètres de configuration P1, P2, ...PN. On entend par séquence une liste ordonnée de modules logiciels de configuration. Chaque paramètre de configuration P1, P2, ...PN est associé à un module logiciel respectivement Mod1, Mod2, ... ModN. Par exemple, les paramètres de configuration P1, P2, ...PN correspondent respectivement à un paramétrage :
- du design de conception optique, c'est-à-dire la fonction de puissance optique de la lentille (P1),
- de la couleur de la lentille (P2),
- d'un traitement anti-reflet (P3),
- du matériau de la lentille (P4),
- d'une vue représentative d'un sujet équipé des lentilles et/ou de la monture (P5),
- d'une prise de vue du porteur (P6),
- d'une vue en trois dimensions (PN).

Sur la zone 102, l'opticien peut définir plusieurs séquences Seq1, Seq2, Seq3 d'exécution des différents modules. A l'intersection d'une ligne correspondant à un paramètre de configuration et d'une colonne correspondant à une séquence, un menu déroulant 112 permet de sélectionner le paramètre dans la séquence correspondante et de définir son numéro d'ordre d'exécution dans la séquence. On peut ainsi définir différentes séquences, en sélectionnant pour chaque séquence les paramètres que l'on souhaite configurer et l'ordre d'exécution des modules correspondants. Par exemple la séquence Seq1 est définie par la colonne de paramètres dans l'ordre d'exécution suivant : P2, P1, P3, P4, P6, P5, PN. La séquence Seq2 est définie par la colonne de paramètres dans l'ordre d'exécution suivant : P1, P6, P5, P4. La séquence Seq3 n'est pas définie.

Une troisième zone de pré-sélection 103 de l'interface graphique 100 de la figure 3 comporte deux listes de présélection présentées côte à côte. On peut par exemple pré-sélectionner un fournisseur de lentilles Sup1 et/ou Sup2. Seuls les produits du ou des fournisseurs ainsi présélectionnés seront ensuite proposés et utilisés lors de l'exécution des modules de configuration. Pour chaque fournisseur, on peut sélectionner un ou plusieurs produits parmi une liste de produits présélectionnés Prod1, Prod2, Prod3, Prod4 correspondant au fournisseur Sup1 et respectivement Prod5, Prod6, Prod7, Prod8 correspondant au fournisseur Sup2. Cette zone de présélection permet ainsi de sélectionner informatiquement des produits dans un ou plusieurs catalogues fournisseur. L'opticien peut ainsi sélectionner des produits qu'il souhaite vendre en priorité pendant une certaine période de temps.

Une quatrième zone de pré-sélection 104 de l'interface graphique 100 de la figure 3 comporte des moyens de présélection 114 d'une ou de plusieurs couleurs de la lentille. Une autre zone de pré-sélection 105 de l'interface graphique 100 de la figure 3 comporte des moyens de présélection 115 d'une ou de plusieurs transitions de couleur de la lentille.

Un bouton 108 permet par un clic de souris de valider les présélections des différentes zones de l'interface graphique 100. L'homme du métier comprendra aisément que l'interface graphique 100 permet de définir un ensemble de paramètres dits favoris, en particulier la définition des séquences, qui sont ensuite utilisés pour l'exécution d'une séquence d'exécution de modules de configuration. D'autres présélections correspondant à d'autres paramètres et/ou d'autres moyens de présélection adaptés sont bien sûr envisageables.

Supposons qu'une séquence particulière a été choisie. La validation de la séquence démarre l'exécution séquentielle d'un ou de plusieurs modules de configuration.

L'interface de la figure 3 représente un exemple d'interface de vente configurable en fonction de profils prédéterminés selon les critères suivants :
a) Produits 103 :
   - un premier critère correspond au segment client et détermine une liste de produits Sup1, Sup2 (définis par leur design optique, les matériaux, les traitements de surface...) accessible à une filiale particulière, une chaîne de magasins et/ou une catégorie de clients ;
   - un deuxième critère Prodi correspond aux produits favoris de l'opticien (verres progressifs génériques ou particuliers, coloration ...). Le deuxième critère permet d'affiner la sélection opérée par le premier critère.
b) Ambiance 101 :
   L'ambiance indique le profil d'utilisation des lunettes (mer, montage, indoor, outdoor ...). L'ambiance peut de sélectionner une image de fond adaptée en fonction de la situation (fond sur lequel on fait le test de simulation est réalisé lors de l'exécution d'un module de configuration).
c) Favoris Navigation 102 :
   Les favoris navigation 102 servent à définir une séquence ordonnée de différents modules de configuration à exécuter l'un après l'autre.
d) Montures :
   L'interface peut proposer un choix de différentes montures pour un essayage par gammes (en fonction des tailles, marques, formes, prix ...).
e) Promotions par périodes.
   De façon avantageuse, la conception de listes prédéterminées est effectuée en amont, par la caractérisation des combinaisons possibles techniquement ou sur le plan commercial.

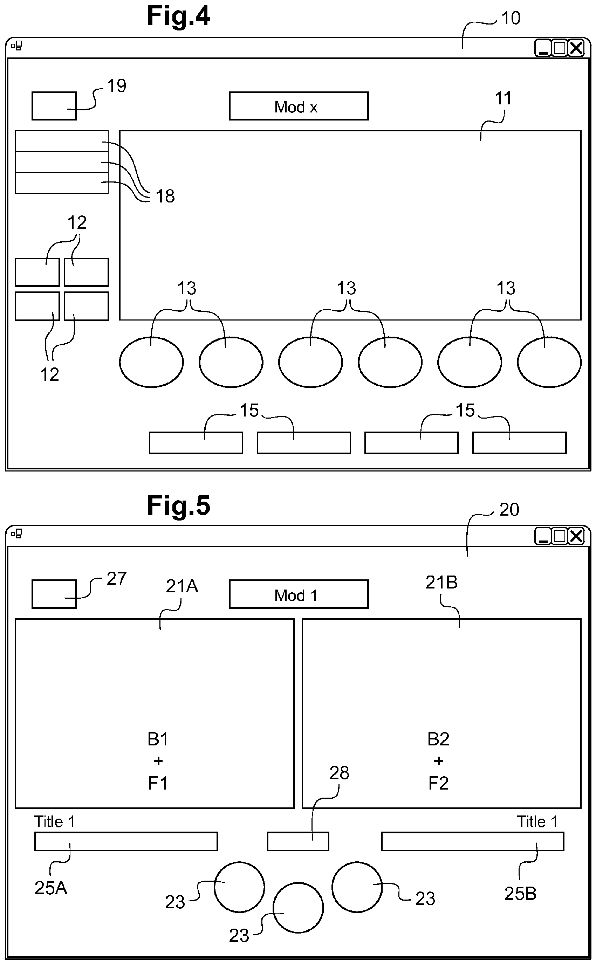

La figure 4 représente schématiquement un exemple d'interface graphique 10 d'un module de configuration Modx selon un mode de réalisation particulier. L'interface graphique 10 comporte une zone de présentation graphique 11, des zones d'affichage d'un contenu textuel 15, 19 et différents boutons de sélection 12, 13 et 18. A titre d'exemple, la zone d'affichage 19 permet par exemple d'afficher le nom du client. Chaque bouton 12 correspond à une valeur différente d'un paramètre de configuration Px associé au module Modx. Par exemple, le paramètre Px peut correspondre à la couleur d'une lentille, à choisir par exemple parmi le verre blanc, noir, brun ou gris. La sélection d'un bouton 12 permet de sélectionner une valeur pré-enregistrée par ailleurs du paramètre de configuration Px. La zone de présentation graphique 11 peut par exemple afficher en arrière plan une image correspondant à une ambiance ou une scène sélectionnée par ailleurs. La zone graphique 11 permet d'afficher en premier plan un filtre coloré correspondant à la valeur sélectionnée du paramètre Px en superposition sur l'image d'ambiance. L'utilisateur peut ainsi visualiser l'image d'une scène à travers une lentille de telle ou telle couleur. La sélection d'un autre bouton 12 sélectionne une autre valeur du paramètre de couleur et entraîne l'affichage d'un filtre coloré correspondant. Chaque bouton 13 correspond à une action différente. Par exemple, les boutons 13 peuvent permettre de sélectionner différentes images d'ambiance. La sélection d'un bouton 13 entraîne la modification de l'image d'ambiance affichée. Un bouton 13 peut aussi permettre d'exécuter une action, par exemple de modifier horizontalement et/ou verticalement la direction du regard dans une vue en trois dimensions. L'utilisateur peut ainsi visualiser l'effet de la couleur de la lentille dans différents environnements visuels tels que : en extérieur, en intérieur, sur fond clair ou sombre, en vision de loin, en vision de près... Les zones d'affichage d'un contenu textuel 15 permettent d'afficher un texte court en lien avec le ou les paramètres sélectionnés. Le contenu textuel pré-enregistré affiché en 15 permet de fournir une information complémentaire telle qu'un conseil. Les boutons 18 sont des boutons pour passer à l'interface graphique d'un module précédent ou d'un module suivant dans la séquence. La sélection d'un bouton 18 permet de valider la sélection d'une valeur du paramètre Px. Préférentiellement, l'exécution du module de configuration subséquent démarre automatiquement dès que le paramètre Px du module Modx est validé.

La figure 5 est un schéma-bloc représentant un autre exemple d'interface graphique d'un module de configuration Mod1. L'interface graphique 20 comporte deux zones de présentation graphique 21A et 21B, différents boutons de sélection 23, 27, 28 et des zones d'affichage de contenus textuels 25A et 25B. Les deux zones de présentation graphique 21A et 21B permettent une comparaison graphique entre deux configurations différentes. Avantageusement, chaque zone de présentation graphique 21A, 21B permet d'afficher un assemblage graphique comprenant une image d'arrière plan et un filtre de recouvrement (overlay) en surperposition sur l'image d'arrière plan. Par exemple, la zone 21A affiche un assemblage graphique comprenant une image d'arrière plan B1 et un filtre de recouvrement F1, tandis que la zone 21B affiche un autre assemblage graphique comprenant une image d'arrière plan B2 et un filtre de recouvrement F2. A titre d'exemple, l'image B1 peut correspondre à un enregistrement vidéo ou une simulation d'une scène en trois dimensions. Le filtre F1 peut représenter une simulation graphique d'un premier paramétrage de puissance optique d'une lentille progressive. L'image B2 peut correspondre à un enregistrement vidéo ou une simulation d'une autre scène en trois dimensions. Le filtre F2 peut représenter une simulation graphique d'un deuxième paramétrage de puissance optique d'une autre lentille progressive. La zone 21A présente graphiquement la vision du point de vue du porteur équipé d'une première lentille dans l'environnement de l'image B1 et la zone 21B présente la vision du point de vue du porteur équipé d'une deuxième lentille dans l'environnement de l'image B2. L'interface 20 permet ainsi de comparer graphiquement différentes configurations de lentilles correctrices.

De plus, les boutons 23 permettent, à l'intérieur du module Mod1, de lancer des simulations dynamiques. Chaque bouton 23 correspond à une simulation dynamique particulière. Par exemple, un bouton 23 permet de lancer une simulation dynamique dans la zone de présentation 21A en parcourant l'image en trois dimensions B1 de manière à simuler une modification de la direction du regard du porteur. Un autre bouton 23 permet de lancer une autre simulation dynamique dans la zone de présentation 21B en parcourant l'image en trois dimensions B2 de manière à simuler une modification de l'inclinaison de la tête du porteur. Un troisième bouton 23 permet de lancer simultanément la simulation dynamique de changement de regard dans la zone de présentation 21A et la simulation dynamique d'inclinaison de la tête dans la zone de présentation 21B. Avantageusement, les boutons 23 sont de type marche/arrêt par simple clic. La zone d'affichage de contenu textuel 25A, respectivement 25B, affiche un texte court en lien avec la simulation dynamique représentée sur la zone 21A, respectivement 21B. Le bouton 28 permet de comparer la vision avec une même synchronisation pour les configurations de deux lentilles différentes. Le bouton 27 permet de retourner au menu principal ou d'enchaîner l'exécution du module subséquent.

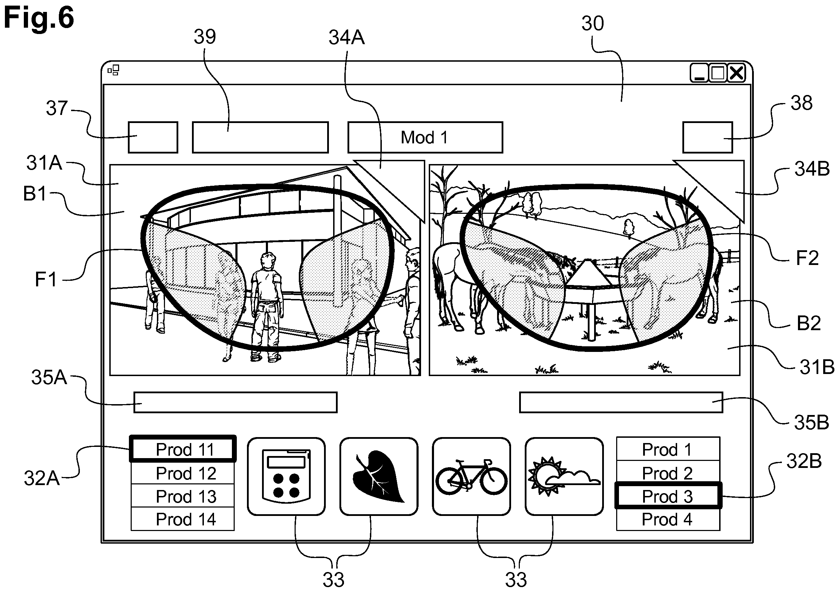

La figure 6 illustre un premier exemple d'interface graphique d'un module de configuration Mod1 pour la sélection d'un type de lentille en mode vision, encore appelé mode «To see ». L'interface graphique 30 comporte deux zones de présentation graphique 31A et 31B, différents boutons de sélection 32, 33, 37, 38 et des zones d'affichage de contenus textuels 35A, 35B et 39 et des zones de validation 34A, 34B. La zone 39 permet par exemple d'afficher le nom du porteur pour lequel on souhaite effectuer la configuration. Les deux zones de présentation graphique 31A et 31B permettent une comparaison graphique entre deux configurations différentes. Comme expliqué en lien avec la figure 5, chaque zone de présentation graphique 31A, 31B permet d'afficher un assemblage graphique comprenant une image d'arrière plan et un filtre de recouvrement (overlay) en superposition sur l'image d'arrière plan. Ainsi, la zone 31A affiche un assemblage graphique comprenant une image d'arrière plan B1 et un filtre de recouvrement F1, tandis que la zone 31B affiche un autre assemblage graphique comprenant une image d'arrière plan B2 et un filtre de recouvrement F2. L'image B1, respectivement B2, est une image statique, dynamique, un enregistrement vidéo ou encore une simulation d'une scène en trois dimensions. Dans l'exemple de la figure 6, le filtre F1 représente la simulation graphique d'une lentille progressive suivant un premier paramétrage de puissance optique ou encore design optique. Le filtre F2 représente une simulation graphique d'une autre lentille progressive suivant un deuxième paramétrage de puissance optique. La zone de sélection 32A permet de sélectionner un produit Prod1 parmi une liste de différents produits Prod1, Prod2, Prod3, Prod4. Chaque produit correspond à une lentille progressive ayant un paramétrage de puissance optique spécifique, qui appelle un filtre F1 associé. La zone 21A présente graphiquement la vision du point de vue du porteur équipé d'une première lentille dans l'environnement de l'image B1 compte tenu du filtre F1 sélectionné, c'est-à-dire le produit Prod1 sélectionné. De manière analogue, la zone 21B présente la vision du point de vue du porteur équipé d'une deuxième lentille dans l'environnement de l'image B2 compte tenu du filtre F2 sélectionné, c'est-à-dire le produit Prod3 sélectionné. La zone d'affichage de contenu textuel 35A, respectivement 35B, affiche un texte court en lien avec la sélection du produit représenté sur la zone 31A, respectivement 31B. L'interface 30 permet ainsi de comparer graphiquement différentes configurations de lentilles progressives.

La zone de validation 34A, respectivement 34B, permet de sélectionner la configuration correspondant au paramétrage représentée sur la zone graphique 31A, respectivement 31B. D'autre part, les boutons 33 permettent, à l'intérieur du module Mod1, de lancer des actions complémentaires en lien dynamique avec la sélection en cours. Chaque bouton 33 correspond à une action particulière telle que : le calcul du prix de la lentille, l'affichage dynamique d'une simulation d'image de fond en mouvement, l'affichage dynamique simulant une variation de luminosité... Avantageusement, les boutons 33 sont de type marche/arrêt par simple clic. Le bouton 37 permet de retourner un écran précédent. Le bouton 38 permet de passer à un écran suivant ou d'enchaîner l'exécution du module subséquent.

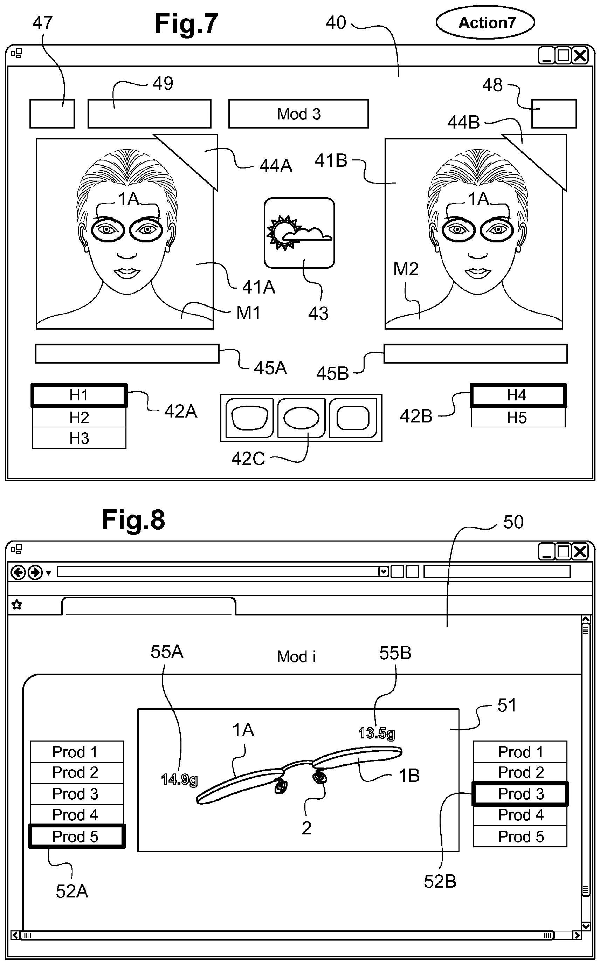

La figure 7 illustre un exemple d'interface graphique d'un autre module de configuration pour la sélection de la teinte et/ou photochromie d'une lentille. Le module de configuration Mod3 permet de visualiser une représentation du porteur muni des lentilles et/ou de la monture, encore appelé mode «To be seen ». L'interface graphique 40 comporte deux zones de présentation graphique 41A et 41B, différents boutons de sélection 42A, 42B, 42C, 47, 48, des zones d'affichage de contenus textuels 45A, 45B et 49 et des zones de validation 44A, 44B. La zone 49 permet par exemple d'afficher le nom du porteur pour lequel on effectue la configuration. Les deux zones de présentation graphique 41A et 41B permettent une comparaison visuelle entre deux configurations différentes. Comme expliqué en lien avec les figures 5 et 6, chaque zone de présentation graphique 41A, 41B permet d'afficher un assemblage graphique comprenant une image d'arrière plan et un filtre de recouvrement (overlay) en superposition sur l'image d'arrière plan. Ainsi, la zone 41A affiche un assemblage graphique comprenant une image d'arrière plan M1 et un filtre de recouvrement 1A tandis que la zone 41B affiche un autre assemblage graphique comprenant une image d'arrière plan M1 et un filtre de recouvrement 1B. Dans le présent module Mod3, l'image M1, respectivement M2 est une image statique, dynamique, un enregistrement photo ou vidéo du visage du porteur sans verre ni monture de lunettes. Avantageusement, les images M1 et M2 sont identiques afin de permettre une comparaison objective de la couleur des verres sur le porteur. De façon avantageuse, une photo M1 du porteur peut être enregistrée par un module séparé de la séquence en cours d'exécution ou par une action spécifique à l'intérieur d'un module.

Dans l'exemple de la figure 7, le filtre 1A représente la simulation d'une paire de verres colorés. La zone de sélection 42A permet de sélectionner, parmi une liste de différentes couleurs de verre proposées (H1, H2, H3), la couleur H1 de la paire de verres colorés qui correspond au filtre 1A affiché sur la zone 41A. La zone 41A présente graphiquement une vue de face du porteur équipé d'une première paire de verres colorés dans l'environnement de l'image M1 compte tenu du filtre 1A sélectionné, c'est à dire de la couleur H1 sélectionnée. De manière analogue, le filtre 1B représente une simulation graphique d'une autre paire de verres colorés correspondant à la couleur H4 sélectionnée dans la zone de sélection 42B parmi une autre liste de couleurs H4 et H5. De manière analogue, la zone 41B présente une vue de face du porteur équipé d'une deuxième paire de verres colorés sur l'image M2 compte tenu du filtre 1B sélectionné, c'est-à-dire de la couleur H4 sélectionnée. La zone d'affichage de contenu textuel 45A, respectivement 45B, affiche un texte court en lien avec la couleur de verre sélectionnée et représentée sur la zone graphique 41A, respectivement 41B. L'interface 40 permet ainsi de comparer graphiquement différentes couleurs de verres telles qu'elles apparaitront lorsque les verres seront portés par le porteur. La zone de validation 44A, respectivement 44B, permet de valider la configuration correspondant au paramétrage représentée sur la zone graphique 41A, respectivement 41B. D'autre part, les boutons 42C permettent, à l'intérieur du module Mod3, de modifier la forme des verres. Chaque bouton-icône 42C permet par simple clic sur l'icône simplifiée correspondante de sélectionner et d'appliquer sur les filtres 1A et/ou 1B une forme de verre particulière telle que : elliptique, rectangulaire, arrondie... Le bouton 47 permet de retourner un écran précédent. Le bouton 48 permet de passer à un écran suivant ou d'enchaîner l'exécution du module subséquent. Sur la figure 7, aucune monture de lunettes n'est représentée sur les zones graphiques 41a et 41B. De manière alternative, on peut prévoir l'affichage d'un filtre correspondant à une monture standard ou encore, comme paramètre complémentaire le choix d'une monture et son affichage en combinaison avec les verres sélectionnés (forme et/ou couleur).

De manière analogue ou complémentaire, on peut aussi représenter la sélection de différents traitements de surface tels que traitement antireflet. On peut aussi afficher différents paramètres de transition de couleur d'un verre.

La figure 8 illustre un autre exemple d'interface graphique 50 d'un module de configuration Modi permettant de visualiser graphiquement différents paramètres de la lentille (épaisseur et/ou poids) en fonction du type de lentille sélectionnée. Le module de configuration Modi permet de représenter une vue, par exemple de profil, d'une simulation des verres et de la monture. L'interface graphique 50 comporte une zone de présentation graphique 51, différents zones de sélection par surbrillance 52A, 52B et des zones d'affichage de contenus textuels 55A et 55B.

La zone de présentation graphique 51 permet de représenter une monture de lunettes 2, équipée d'un verre pour l'oeil gauche et d'un autre verre pour l'oeil droit. Plus précisément, la zone de présentation graphique 51 permet d'afficher un assemblage graphique comprenant une image d'arrière plan (fond neutre dans l'exemple illustré figure 8), un premier filtre de recouvrement (overlay) correspondant au verre droit, un deuxième filtre de recouvrement correspondant au verre gauche et préférentiellement un troisième filtre de recouvrement (overlay) correspondant à une monture. Les filtres de recouvrement sont affichés en superposition sur l'image d'arrière plan. Le troisième filtre de recouvrement peut correspondre à une représentation graphique d'une monture standard, à une représentation graphique d'une monture présélectionnée, ou encore à une photographie d'une telle monture. La zone de sélection 52A permet de sélectionner un verre particulier pour l'oeil gauche parmi une première liste de différents produits proposés (Prod1, Prod2, Prod3, Prod4, Prod5). De manière analogue, la zone de sélection 52B permet de sélectionner un verre particulier pour l'oeil droit parmi une deuxième liste de différents produits proposés (Prod1, Prod2, Prod3, Prod4, Prod5) qui peut être identique ou différente de la première liste. Par exemple, les produits Prod1, Prod2, Prod3, Prod4, Prod5 peuvent correspondre à différents verres proposés au catalogue d'un fournisseur ou encore à différents matériaux utilisables pour confectionner une lentille ophtalmique. La zone 51 présente graphiquement une vue de profil de la monture 2, d'un verre pour l'oeil gauche 1A correspondant au produit Prod5 sélectionné dans la zone de sélection 52A en surbrillance et d'un verre pour l'oeil droit 1B correspondant au produit Prod3 sélectionné dans la zone de sélection 52B en surbrillance.

La zone d'affichage de contenu textuel 55A, respectivement 55B, affiche un texte court en lien avec le produit sélectionné et représenté sur le verre pour l'oeil gauche 1A et respectivement sur le verre pour l'oeil droit 1B. La zone de présentation graphique 51 permet simultanément de représenter le profil d'un verre pour l'oeil gauche 1A qui serait fabriqué dans un premier matériau correspondant à la sélection Prod5 et de représenter le profil d'un verre pour l'oeil droit 1B qui serait fabriqué dans un deuxième matériau correspondant à la sélection Prod3. Avantageusement, la zone 51 permet d'afficher en 55A à côté du verre pour l'oeil gauche 1A une information sur le poids du verre Prod5 sélectionné et en 55B, à côté du verre pour l'oeil gauche 1B, une information sur le poids du verre Prod3 sélectionné. L'interface 50 permet ainsi de comparer graphiquement des aspects géométriques de différents verres en fonction du matériau choisi. De manière complémentaire, le module Modi permet de visualiser d'autres vues des verres 1A, 1B et/ou de la monture. Avantageusement, la simulation du profil des verres 1A et 1B prend en compte le paramétrage de la prescription de correction optique. L'exécution du module Modi de visualisation du profil des verres de lunettes prend avantageusement en compte les paramètres validés lors de l'exécution des modules précédents de la même séquence.

L'interface du module Modi de la figure 8 peut être utilisée comme suit pour choisir un profil plutôt qu'un autre :
1) Le choix peut être orienté par l'opticien ou en fonction de la sensibilité du client ;
2a) choix de vie du porteur : ambiance d'utilisation (montagne/ autres, utilisation VL/VP prédominance), indoor/outdoor, activités, âge, genre, type équipement précédent, variation de l'environnement (passage su sombre au clair ou inversement) ...
2b) type de montures recherchée : taille/galbe/cerclées/rainées/percées.
2c) prescription

D'autres modules que ceux détaillés en lien avec les figures 1 à 8 sont bien sûr envisageables.

L'exécution la séquence choisie de modules de configuration permet de faire suivre au futur porteur un parcours personnalisation, au cours duquel les choix effectués dans chaque module (c'est-à-dire les valeurs des paramètres sélectionnés et validés) sont enregistrés dans une base de données ou un fichier central. Avantageusement, on présente les résultats finaux de la séquence sous la forme d'un maximum de trois configurations à choisir. Les trois configurations sont présentées en fonction des coûts et/ou d'arguments techniques ou esthétiques. On aboutit ainsi à la détermination d'une configuration de verres optimale pour le porteur, réalisable techniquement et qui prenne en compte des aspects commerciaux, tels que des promotions sur certains paramètres de configuration (promotions sur des verres colorés par exemple).

De manière plus générale, on propose un logiciel dans lequel l'opticien peut configurer différents parcours de ventes.

Le procédé permet :
- d'uniformiser les discours des forces de vente via le partage des méthodes communes ;
- d'adapter les choix et les méthodes de vente : partage de méthodes communes ;
- d'adapter les choix et les méthodes de vente de l'opticien en fonction du client ;
- de mettre à jour systématiquement les valeurs des paramètres de configuration via une plateforme mise à jour par réseau informatique (internet ou autre) ;
- de faire évoluer certains contenus sans influence sur le contenant, ce qui limite les redéveloppements d'outils marketing (images, vidéos et montages), adaptations en fonction des campagnes commerciales.

## Revendications

1. Méthode de fabrication d'une lentille ophtalmique correctrice de lunettes personnalisée pour un porteur, comportant les étapes de :
- définir et enregistrer informatiquement des paramètres de configuration de la lentille, ces paramètres de configuration (P1, P2,...,PN, Sup1, Sup2, Prod1,...,Prod8) comprenant des paramètres de conception optique de la lentille, dont une prescription de correction de réfraction du porteur et un modèle de conception optique,
- fabriquer la lentille conformément aux paramètres de configuration,
**caractérisée en ce que**, pour définir les paramètres de configuration de la lentille, la méthode comporte les étapes suivantes :
- enregistrer une pluralité de séquences ordonnées (Seq1, Seq2, Seq3) d'exécution de différents modules logiciels interactifs de configuration (Mod1, Mod2,...,Modi,...,ModN), chaque module (Modi) étant associé à un des paramètres de configuration (P1, P2,...,PN, Sup1, Sup2, Prod1,...,Prod8) et comprenant, dans une interface graphique (10, 20, 30, 40, 50), des moyens de sélection (12, 32A, 32B, 42A, 42B, 52A, 52B) d'au moins une valeur du paramètre de configuration associée au module parmi une présélection de valeurs de ce paramètre, des moyens de simulation graphique d'une lentille virtuelle obtenue avec la valeur sélectionnée du paramètre de configuration, des moyens de validation (34A, 34B, 44A, 44B) de la sélection d'une valeur du paramètre de configuration,
- exécuter au moins une séquence ordonnée (Seq1, Seq2, Seq3) sélectionnée parmi la pluralité de séquences ordonnées;
- à l'issue de l'exécution de chaque module (Modi) de ladite séquence ordonnée, enregistrer la valeur sélectionnée et validée du paramètre de configuration associé à ce module (Modi), et dans lequel :
- ladite séquence ordonnée comporte un module (Mod 1) associé à un paramètre de configuration de lentille progressive comprenant une répartition de la fonction de puissance optique de la lentille progressive, et, dans laquelle l'exécution du module (Mod1) comporte les étapes suivantes :
- sélection d'une image en trois dimensions (B1) représentative d'un environnement visuel et affichage de ladite image en trois dimensions (B1) en couche d'arrière-plan d'une zone graphique (21A) de l'interface graphique (20, 30) du module concerné ;
- simulation d'un filtre correctif (F1) associé à la valeur sélectionnée de répartition de la fonction de puissance optique de la lentille progressive;
- affichage du filtre correctif (F1) en superposition par transparence sur ladite image en trois dimensions (B1) en couche d'arrière-plan,
- le module (Mod 1) comprenant un bouton permettant de lancer une simulation dynamique de manière à simuler la vision du porteur à travers une lentille virtuelle personnalisée en parcourant l'image en trois dimensions de manière à simuler une modification de l'inclinaison de la tête du porteur.

2. Méthode de fabrication d'une lentille ophtalmique correctrice selon la revendication 1, comportant, à l'issue de l'exécution d'un module (Modi) de ladite séquence ordonnée (Seq1, Seq2, Seq3), une étape d'utilisation de la valeur du paramètre de configuration sélectionnée et validée à la fin de l'exécution dudit module, pour déterminer une présélection de valeurs du paramètre de configuration d'un module subséquent de ladite séquence.

3. Méthode de fabrication d'une lentille ophtalmique correctrice selon l'une des revendications précédentes, dans laquelle les paramètres de configuration de la lentille comprennent des paramètres de fabrication de la lentille, dont la répartition de la fonction de puissance optique, le matériau de la lentille, la couleur de la lentille, la polarisation de la lentille, le(s) traitement(s) de surface incluant le traitement anti-reflet, le traitement de résistance aux chocs, le traitement anti-rayure, le traitement antistatique, le traitement hydrophobe, le traitement oléophobe, le traitement polarisant, la propriété de photochromie de la lentille, et/ou des paramètres géométriques et morphologiques relatifs au porteur et à une monture de lunettes.

4. Méthode de fabrication d'une lentille ophtalmique correctrice selon l'une des revendications 1 à 3 dans laquelle l'exécution du module (Mod1) comprend en outre les étapes suivantes :
- sélection d'une deuxième image en trois dimensions (B2) représentative d'un environnement visuel et affichage de ladite deuxième image en trois dimensions (B2) en couche d'arrière-plan d'une deuxième zone graphique (21B, 31B) de l'interface graphique (20, 30) du module concerné ;
- simulation d'un deuxième filtre correctif (F2) associé à une autre valeur du paramètre de configuration de la lentille associé à une autre valeur de répartition de la fonction de puissance optique de la lentille progressive ;
- affichage du deuxième filtre correctif (F2) en superposition par transparence sur ladite deuxième image en trois dimensions (B2) en couche d'arrière-plan de la deuxième zone graphique (21B, 31B), le module (Mod 1) comprenant un autre bouton permettant de lancer une autre simulation dynamique, de manière à simuler la vision du porteur à travers une deuxième lentille virtuelle personnalisée conformément à l'autre valeur du paramètre de configuration associée à la répartition de la fonction de puissance optique, en parcourant la deuxième image en trois dimensions de manière à simuler une modification de l'inclinaison de la tête du porteur de manière à permettre la comparaison d'au moins deux lentilles virtuelles personnalisées.

5. Méthode de fabrication d'une lentille ophtalmique correctrice selon l'une des revendications 1 à 4 dans laquelle l'exécution d'au moins un des modules comporte les étapes suivantes :
- sélection d'au moins une vue du porteur (M1, M2) et affichage de ladite vue du porteur (M1, M2) en couche d'arrière-plan d'une zone (41A, 41B) de l'interface graphique du module concerné ;
- simulation d'un filtre de forme et de couleur (1A, 1B) de la lentille en fonction de la valeur sélectionnée du paramètre de configuration associé au module ;
- affichage du filtre de forme et de couleur (1A, 1B) de la lentille en superposition par transparence sur la couche d'arrière plan de manière à simuler une image de la lentille portée par le porteur et personnalisée conformément à la valeur sélectionnée du paramètre de configuration associé au module.

6. Méthode de fabrication d'une lentille ophtalmique correctrice selon l'une des revendications 3 à 5 dans laquelle l'étape de sélection d'au moins une vue du porteur (M1, M2) comprend la sélection d'une séquence d'images ou d'une image en trois dimensions.

7. Méthode de fabrication d'une lentille ophtalmique correctrice selon l'une des revendications 3 à 6 dans laquelle l'étape de simulation d'un filtre (F1, F2, 1A, 1B) comprend la simulation dynamique d'un filtre par une séquence d'images ou par une image en trois dimensions.

8. Méthode de fabrication d'une lentille ophtalmique correctrice selon l'une des revendications 1 à 7 comportant en outre :
- l'affichage d'un contenu textuel (15, 25A, 25B, 35A, 35B, 45A, 45B, 55A, 55B) en fonction de la valeur sélectionnée du paramètre de configuration associé au module.

9. Méthode de fabrication d'une lentille ophtalmique correctrice selon l'une des revendications 1 à 8 comportant un module (Modi) de choix de contour de lentille en tant que paramètre de configuration, ce module comprenant, dans son interface graphique (50), des moyens de sélection d'au moins un contour de lentille parmi une présélection de contours de lentille associés à différentes montures de lunettes, des moyens de simulation graphique d'une lentille virtuelle présentant le contour sélectionné et des moyens de validation de la sélection d'un contour de lentille.

10. Méthode de fabrication d'une lentille ophtalmique correctrice selon l'une des revendications 1 à 9 comportant en outre une étape de présentation des valeurs des différents paramètres de configuration sélectionnés et validés à l'issue de l'exécution de ladite au moins une séquence ordonnée.

11. Méthode de fabrication d'une lentille ophtalmique correctrice selon l'une des revendications 1 à 10 comportant en outre une étape de vérification de la faisabilité d'une lentille ophtalmique correctrice conformément aux valeurs des différents paramètres de configuration sélectionnés et validés à l'issue de l'exécution de ladite au moins une séquence ordonnée.

12. Méthode de fabrication d'une lentille ophtalmique correctrice selon l'une des revendications 1 à 11 comportant en outre une étape de constitution d'au moins une présélection de valeurs associée à un paramètre de configuration.

## Patentansprüche

1. Verfahren zur Herstellung einer für einen Träger personalisierten korrigierenden Brillenglaslinse, welches folgende Schritte umfasst:
- Definieren und computerbasiertes Aufzeichnen der Konfigurationsparameter der Linse, wobei diese Konfigurationsparameter (P1, P2, ..., PN, Sup1, Sup2, Prod1, ..., Prod8) Parameter der optischen Gestaltung der Linse, darunter eine Vorschrift für die Korrektur der Refraktion des Trägers, und ein Modell der optischen Gestaltung umfassen,
- Herstellen der Linse gemäß den Konfigurationsparametern,
**dadurch gekennzeichnet, dass**, um die Konfigurationsparameter der Linse zu definieren, das Verfahren die folgenden Schritte umfasst:
- Aufzeichnen mehrerer geordneter Folgen (Seql, Seq2, Seq3) der Ausführung verschiedener interaktiver Konfigurations-Softwaremodule (Mod1, Mod2, ..., Modi, ..., ModN), wobei jedes Modul (Modi) einem der Konfigurationsparameter (P1, P2, ..., PN, Sup1, Sup2, Prod1, ..., Prod8) zugeordnet ist und in einer grafischen Oberfläche (10, 20, 30, 40, 50) Mittel zur Auswahl (12, 32A, 32B, 42A, 42B, 52A, 52B) wenigstens eines Wertes des dem Modul zugeordneten Konfigurationsparameters aus einer Vorauswahl von Werten dieses Parameters, Mittel zur grafischen Simulation einer mit dem ausgewählten Wert des Konfigurationsparameters erhaltenen virtuellen Linse und Mittel zur Validierung (34A, 34B, 44A, 44B) der Auswahl eines Wertes des Konfigurationsparameters umfasst,
- Ausführen wenigstens einer geordneten Folge (Seql, Seq2, Seq3), die aus den mehreren geordneten Folgen ausgewählt wurde;
- nach Abschluss der Ausführung jedes Moduls (Modi) der geordneten Folge, Aufzeichnen des ausgewählten und validierten Wertes des diesem Modul (Modi) zugeordneten Konfigurationsparameters, und wobei:
- die geordnete Folge ein Modul (Mod 1) aufweist, das einem Konfigurationsparameter einer Multifokallinse zugeordnet ist, der eine Verteilung der Funktion der optischen Wirkung der Multifokallinse umfasst, und wobei die Ausführung des Moduls (Mod1) die folgenden Schritte umfasst:
- Auswahl eines dreidimensionalen Bildes (B1), das für eine visuelle Umgebung repräsentativ ist, und Anzeige dieses dreidimensionalen Bildes (B1) als Hintergrundschicht eines Grafikbereichs (21A) der grafischen Oberfläche (20, 30) des betreffenden Moduls;
- Simulation eines Korrekturfilters (F1), das dem ausgewählten Wert der Verteilung der Funktion der optischen Wirkung der Multifokallinse zugeordnet ist;
- Anzeige des Korrekturfilters (F1) als durchsichtige Überlagerung auf dem als Hintergrundschicht dargestellten dreidimensionalen Bild (B1),
- wobei das Modul (Mod 1) eine Schaltfläche umfasst, die es gestattet, eine dynamische Simulation zu starten, um die Sicht des Trägers durch eine personalisierte virtuelle Linse hindurch zu simulieren, indem das dreidimensionale Bild durchlaufen wird, um so eine Änderung der Neigung des Kopfes des Trägers zu simulieren.

2. Verfahren zur Herstellung einer korrigierenden Brillenglaslinse nach Anspruch 1, welches nach Abschluss der Ausführung eines Moduls (Modi) der geordneten Folge (Seql, Seq2, Seq3) einen Schritt der Verwendung des am Ende der Ausführung dieses Moduls ausgewählten und validierten Wertes des Konfigurationsparameters umfasst, um eine Vorauswahl von Werten des Konfigurationsparameters eines nachfolgenden Moduls der Folge zu bestimmen.

3. Verfahren zur Herstellung einer korrigierenden Brillenglaslinse nach einem der vorhergehenden Ansprüche, wobei die Konfigurationsparameter der Linse Herstellungsparameter der Linse umfassen, darunter die Verteilung der Funktion der optischen Wirkung, das Material der Linse, die Farbe der Linse, die Polarisierung der Linse, die Oberflächenbehandlung(en), welche die Entspiegelungsbehandlung, die Stoßfestigkeitsbehandlung, die Kratzfestigkeitsbehandlung, die antistatische Behandlung, die hydrophobe Behandlung, die oleophobe Behandlung und die polarisierende Behandlung beinhalten, die selbsttönende Eigenschaft der Linse und/oder geometrische und morphologische Parameter, die sich auf den Träger und auf ein Brillengestell beziehen.

4. Verfahren zur Herstellung einer korrigierenden Brillenglaslinse nach einem der Ansprüche 1 bis 3, wobei die Ausführung des Moduls (Mod1) außerdem die folgenden Schritte umfasst:
- Auswahl eines zweiten dreidimensionalen Bildes (B2), das für eine visuelle Umgebung repräsentativ ist, und Anzeige dieses zweiten dreidimensionalen Bildes (B2) als Hintergrundschicht eines zweiten Grafikbereichs (21B, 31B) der grafischen Oberfläche (20, 30) des betreffenden Moduls;
- Simulation eines zweiten Korrekturfilters (F2), das einem weiteren Wert des Konfigurationsparameters der Linse zugeordnet ist, der einem weiteren Wert der Verteilung der Funktion der optischen Wirkung der Multifokallinse zugeordnet ist;
- Anzeige des zweiten Korrekturfilters (F2) als durchsichtige Überlagerung auf dem als Hintergrundschicht des zweiten Grafikbereichs (21B, 31B) dargestellten zweiten dreidimensionalen Bild (B2), wobei das Modul (Mod 1) eine weitere Schaltfläche umfasst, die es gestattet, eine weitere dynamische Simulation zu starten, um die Sicht des Trägers durch eine zweite virtuelle Linse hindurch zu simulieren, die gemäß dem der Verteilung der Funktion der optischen Wirkung zugeordneten weiteren Wert des Konfigurationsparameters personalisiert wurde, indem das zweite dreidimensionale Bild durchlaufen wird, um so eine Änderung der Neigung des Kopfes des Trägers zu simulieren, um so den Vergleich wenigstens zweier personalisierter virtueller Linsen zu ermöglichen.

5. Verfahren zur Herstellung einer korrigierenden Brillenglaslinse nach einem der Ansprüche 1 bis 4, wobei die Ausführung wenigstens eines der Module die folgenden Schritte umfasst:
- Auswahl wenigstens einer Ansicht des Trägers (M1, M2) und Anzeige der Ansicht des Trägers (M1, M2) als Hintergrundschicht eines Bereichs (41A, 41B) der grafischen Oberfläche des betreffenden Moduls;
- Simulation eines Form- und Farbfilters (1A, 1B) der Linse in Abhängigkeit vom ausgewählten Wert des dem Modul zugeordneten Konfigurationsparameters;
- Anzeige des Form- und Farbfilters (1A, 1B) der Linse als durchsichtige Überlagerung auf der Hintergrundschicht, um so ein Bild der von dem Träger getragenen und gemäß dem ausgewählten Wert des dem Modul zugeordneten Konfigurationsparameters personalisierten Linse zu simulieren.

6. Verfahren zur Herstellung einer korrigierenden Brillenglaslinse nach einem der Ansprüche 3 bis 5, wobei der Schritt der Auswahl wenigstens einer Ansicht des Trägers (M1, M2) die Auswahl einer Folge von Bildern oder eines dreidimensionalen Bildes umfasst.

7. Verfahren zur Herstellung einer korrigierenden Brillenglaslinse nach einem der Ansprüche 3 bis 6, wobei der Schritt der Simulation eines Filters (F1, F2, 1A, 1B) die dynamische Simulation eines Filters durch eine Folge von Bildern oder durch ein dreidimensionales Bild umfasst.

8. Verfahren zur Herstellung einer korrigierenden Brillenglaslinse nach einem der Ansprüche 1 bis 7, welches außerdem umfasst:
- die Anzeige eines Textinhalts (15, 25A, 25B, 35A, 35B, 45A, 45B, 55A, 55B) in Abhängigkeit vom ausgewählten Wert des dem Modul zugeordneten Konfigurationsparameters.

9. Verfahren zur Herstellung einer korrigierenden Brillenglaslinse nach einem der Ansprüche 1 bis 8, welches ein Modul (Modi) zur Wahl einer Linsenkontur als Konfigurationsparameter umfasst, wobei dieses Modul in seiner grafischen Oberfläche (50) Mittel zur Auswahl wenigstens einer Linsenkontur aus einer Vorauswahl von verschiedenen Brillengestellen zugeordneten Linsenkonturen, Mittel zur grafischen Simulation einer die ausgewählte Kontur aufweisenden virtuellen Linse und Mittel zur Validierung der Auswahl einer Linsenkontur umfasst.

10. Verfahren zur Herstellung einer korrigierenden Brillenglaslinse nach einem der Ansprüche 1 bis 9, welches außerdem einen Schritt der Präsentation der Werte der verschiedenen Konfigurationsparameter, die nach Abschluss der Ausführung der wenigstens einen geordneten Folge ausgewählt und validiert wurden, umfasst.

11. Verfahren zur Herstellung einer korrigierenden Brillenglaslinse nach einem der Ansprüche 1 bis 10, welches außerdem einen Schritt der Überprüfung der Realisierbarkeit einer korrigierenden Brillenglaslinse gemäß den Werten der verschiedenen Konfigurationsparameter, die nach Abschluss der Ausführung der wenigstens einen geordneten Folge ausgewählt und validiert wurden, umfasst.

12. Verfahren zur Herstellung einer korrigierenden Brillenglaslinse nach einem der Ansprüche 1 bis 11, welches außerdem einen Schritt der Erstellung einer Vorauswahl von Werten, die einem Konfigurationsparameter zugeordnet ist, umfasst.

## Claims

1. Method for manufacturing a corrective ophthalmic spectacle lens personalized for a wearer, comprising the steps of:
- defining and recording, by computer, configuration parameters of the lens, these configuration parameters (P1, P2,...,PN, Sup1, Sup2, Prod1,...,Prod8) comprising optical design parameters of the lens, including a refraction correction prescription for the wearer and an optical design model,
- manufacturing the lens in accordance with the configuration parameters,
**characterized in that**, to define the configuration parameters of the lens, the method comprises the following steps:
- recording a plurality of ordered sequences (Seql, Seq2, Seq3) of execution of various interactive configuration software modules (Mod1, Mod2,..., Modi, ..., ModN), each module (Modi) being associated with one of the configuration parameters (P1, P2,...,PN, Sup1, Sup2, Prod1,...,Prod8) and comprising, in a graphical interface (10, 20, 30, 40, 50), means of selection (12, 32A, 32B, 42A, 42B, 52A, 52B) of at least one configuration parameter value associated with the module from among a preselection of values of this parameter, means of graphical simulation of a virtual lens obtained with the selected value of the configuration parameter, means of validation (34A, 34B, 44A, 44B) of the selection of a value of the configuration parameter,
- executing at least one ordered sequence (Seql, Seq2, Seq3) selected from the plurality of ordered sequences;
- on completion of the execution of each module (Modi) of said ordered sequence, recording the selected and validated value of the configuration parameter associated with this module (Modi), and in which:
- said ordered sequence comprises a module (Mod 1) associated with a configuration parameter of progressive lens comprising a distribution of the optical power function of the progressive lens, and in which the execution of the module (Modi) comprises the following steps:
- selection of a three-dimensional image (B1) representative of a visual setting and display of said three-dimensional image (B1) as background layer of a graphical area (21A) of the graphical interface (20, 30) of the module concerned;
- simulation of a corrective filter (F1) associated with the selected value of distribution of the optical power function of the progressive lens;
- display of the corrective filter (F1) superimposed by transparency on said three-dimensional image (B1) as background layer,
- the module (Mod 1) comprising a button making it possible to launch a dynamic simulation so as to simulate the vision of the wearer through a virtual lens personalized by traversing the three-dimensional image so as to simulate a modification of the wearer's head.

2. Method for manufacturing a corrective ophthalmic lens according to Claim 1, comprising, on completion of the execution of a module (Modi) of said ordered sequence (Seql, Seq2, Seq3), a step of using the configuration parameter value selected and validated at the end of the execution of said module, so as to determine a preselection of values of the configuration parameter for a subsequent module of said sequence.

3. Method for manufacturing a corrective ophthalmic lens according to either of the preceding claims, in which the configuration parameters of the lens comprise manufacturing parameters of the lens, including the distribution of the optical power function, the material of the lens, the color of the lens, the polarization of the lens, the surface treatment(s) including anti-reflection treatment, impact resistance treatment, anti-scratch treatment, antistatic treatment, water-repelling treatment, grease-repelling treatment, polarizing treatment, the photochromy property of the lens, and/or geometric and morphological parameters relating to the wearer and to a spectacle frame.

4. Method for manufacturing a corrective ophthalmic lens according to one of claims 1 to 3, in which the execution of the module (Mod 1) furthermore comprises the following steps:
- selection of a second three-dimensional image (B2) representative of a visual setting and display of said second three-dimensional image (B2) as background layer of a second graphical area (21B, 31B) of the graphical interface (20, 30) of the module concerned;
- simulation of a second corrective filter (F2) associated with another value of the configuration parameter of the lens associated with another value of distribution of the optical power function of the progressive lens;
- display of the second corrective filter (F2) superimposed by transparency on said second three-dimensional image (B2) as background layer of the second graphical area (21B, 31B), the module (Mod 1) comprising another button making it possible to launch another dynamic simulation, so as to simulate the vision of the wearer through a second virtual lens personalized in accordance with the other value of the configuration parameter associated with the distribution of the optical power function, by traversing the second three-dimensional image so as to simulate a modification of the inclination of the wearer's head so as to allow the comparison of at least two personalized virtual lenses.

5. Method for manufacturing a corrective ophthalmic lens according to one of Claims 1 to 4, in which the execution of at least one of the modules comprises the following steps:
- selection of at least one view of the wearer (M1, M2) and display of said view of the wearer (M1, M2) as background layer of an area (41A, 41B) of the graphical interface of the module concerned;
- simulation of a filter of shape and of color (1A, 1B) of the lens as a function of the selected value of the configuration parameter associated with the module;
- display of the filter of shape and of color (1A, 1B) of the lens superimposed by transparency on the background layer so as to simulate an image of the lens worn by the wearer and personalized in accordance with the selected value of the configuration parameter associated with the module.

6. Method for manufacturing a corrective ophthalmic lens according to one of Claims 3 to 5, in which the step of selecting at least one view of the wearer (M1, M2) comprises the selecting of a sequence of images or of an image in three dimensions.

7. Method for manufacturing a corrective ophthalmic lens according to one of Claims 3 to 6, in which the step of simulating a filter (F1, F2, 1A, 1B) comprises the dynamic simulation of a filter by a sequence of images or by an image in three dimensions.

8. Method for manufacturing a corrective ophthalmic lens according to one of Claims 1 to 7, furthermore comprising:
- the display of a textual content (15, 25A, 25B, 35A, 35B, 45A, 45B, 55A, 55B) as a function of the selected value of the configuration parameter associated with the module.

9. Method for manufacturing a corrective ophthalmic lens according to one of Claims 1 to 8, comprising a module (Modi) for choosing lens contour in the guise of configuration parameter, this module comprising, in its graphical interface (50), means for selecting at least one lens contour from among a preselection of lens contours associated with various spectacle frames, means of graphical simulation of a virtual lens exhibiting the selected contour and means for validating the selection of a lens contour.

10. Method for manufacturing a corrective ophthalmic lens according to one of Claims 1 to 9, furthermore comprising a step of presenting the values of the various configuration parameters selected and validated on completion of the execution of said at least one ordered sequence.

11. Method for manufacturing a corrective ophthalmic lens according to one of Claims 1 to 10, furthermore comprising a step of verifying the feasibility of a corrective ophthalmic lens in accordance with the values of the various configuration parameters selected and validated on completion of the execution of said at least one ordered sequence.

12. Method for manufacturing a corrective ophthalmic lens according to one of claims 1 to 11, furthermore comprising a step of constructing at least one preselection of values, associated with a configuration parameter.
